# NEUE EUROPÄISCHE PATENTSCHRIFT

(11) **EP 1 645 448 B2**
(45) Veröffentlichungstag und Bekanntmachung des Hinweises auf die Entscheidung über den Einspruch: **27.11.2013**
(45) Hinweis auf die Patenterteilung: 03.09.2008
(21) Anmeldenummer: 05021949.2
(22) Anmeldetag: 07.10.2005
(51) Int. Cl.: B60J 1/20

(54) **Fensterrollo für ein Fahrzeugfenster**
Window roller blind for a vehicle window
Store à rouleau de fenêtre pour vitres de véhicule

(30) Priorität: 08.10.2004 DE 102004049167
(43) Veröffentlichungstag der Anmeldung: 12.04.2006
(73) Patentinhaber: HS Products Engineering GmbH, 82239 Alling (DE)
(72) Erfinder: Ziegenbein, Werner, D-81929 München (DE)
(74) Vertreter: Patentanwälte Bals & Vogel

(56) Entgegenhaltungen:
- WO-A-85/00633
- DE-A1- 2 642 402
- DE-A1- 10 057 762
- DE-A1- 10 151 872
- DE-A1- 10 155 167
- DE-A1- 19 732 686
- DE-C1- 19 754 557
- DE-C1- 19 910 830
- DE-T2- 69 416 376
- DE-U1- 29 921 860
- DE-U1-202004 000 631
- US-A- 6 086 133

## Beschreibung

Die Erfindung betrifft ein Fensterrollo für ein Fahrzeugfenster nach dem Oberbegriff des Patentanspruches 1.

Ein derartiges aus gattungsgemäßer US-A-6,086,133 A bekanntes Fensterrollo besitzt eine Rollowelle, auf welche eine Rollobahn aufgewickelt und von welcher die Rollobahn abgewickelt werden kann. Eine gemeinsame Kraftübertragungseinrichtung überträgt das Antriebsmoment mittels einer Antriebswelle auf die Rollobahn und mittels eines Getriebes auf das ausziehbare Rollobahnende. Zwischen der Antriebswelle und der Rollowelle befindet sich eine federelastische Ausgleichseinrichtung, um ein straffes Ausziehen und Aufrollen der Rollobahn zu erreichen.

Ein aus DE 101 51 872 A1 bekanntes Fensterrollo für ein Fahrzeugfenster, insbesondere Seitenfenster im Fondbereich des Fahrzeugs besitzt eine Rollowelle, auf welche eine Rollobahn aufgewickelt und abgewickelt werden kann. Zum Aufwickeln und Abwickeln der Rollobahn dient eine Antriebseinrichtung. Bei einer ersten Ausführungsform besitzt die bekannte Antriebseinrichtung einen elektrisch betriebenen Getriebemotor, welcher über zwei Schubgetriebe in Form von Bürstenkabeln, die am Rollobahnende eingreifen, die Rollobahn von der Rollowelle abwickelt. Die Antriebseinrichtung dieser Ausführungsform besitzt ferner einen Federmotor, gegen dessen Rückstellkraft die Rollobahn ausgezogen wird. Beim Aufwickeln der Rollobahn wird die Rückstellkraft dieses Federmotors zum Einsatz gebracht. Bei einer anderen Ausführungsform der DE 101 51 872 A1 besitzt die Antriebseinrichtung eine Zugfeder, mit welcher die Rollobahn von der Rollowelle abgewickelt wird und zum Aufwickeln der Rollobahn auf die Rollowelle wird das Drehmoment eines elektrisch betriebenen Getriebemotors zum Einsatz gebracht. Bei den bekannten Ausführungsformen werden die Bewegungen der Rollobahn in den beiden Richtungen mit Hilfe eines Getriebemotors und mit Hilfe eines Federmotors bzw. einer Zugfeder, der bzw. die als zusätzliches Antriebselement in der Antriebseinrichtung benötigt wird, ausgeführt.

Aufgabe der Erfindung ist es, ein Fensterrollo für ein Fahrzeugfenster der eingangs genannten Art zu schaffen, bei dem ein verbessertes straffes Ausziehen und Aufrollen der Rollobahn erreicht wird, und ein Schrägauszug und/oder unterschiedliche Breiten der Rollobahn beim Auf- und Abwickeln kompensiert werden.

Diese Aufgabe wird erfindungsgemäß durch die kennzeichnenden Merkmale des Patentanspruches 1 gelöst.

Hierdurch ist es möglich, sowohl für das Aufwickeln als auch für das Abwickeln der Rollobahn eine einheitliche Antriebseinrichtung, insbesondere einen elektrisch betriebenen Motor, insbesondere Gleichstrommotor zu verwenden. Durch die federelastische Ausgleichseinrichtung wird eine unter Federvorspannung stehende Führung des Rollobahnendes, welches an einem Zugstab vorzugsweise befestigt ist, sowohl beim Ausziehen bzw. Abwickeln der Rollobahn als auch beim Aufwickeln der Rollobahn auf die Rollowelle erreicht. Hieraus resultiert eine verringerte Geräuschbildung beim Abwickeln und Aufwickeln der Rollobahn. Die Antriebskraft des Motors wird sowohl beim Aufwickeln als auch beim Abwickeln der Rollobahn auf das Rollobahnende und die Rollowelle übertragen.

Die gemeinsame Kraftübertragungseinrichtung wird von dem Elektromotor der Antriebseinrichtung angetrieben und beinhaltet bevorzugt ein Antriebsrad, insbesondere Zahnrad sowie eine Antriebswelle, welche in Drehantriebsverbindung, insbesondere drehfester Verbindung mit dem Antriebsrad steht. Die gemeinsame Kraftübertragungseinrichtung überträgt das vom Elektromotor erzeugte Drehmoment sowohl auf die Rollowelle als auch auf das Rollobahnende. Bei der Übertragung der Antriebskraft ist die gemeinsame Kraftübertragungseinrichtung sowohl mit der Rollowelle als auch mit dem Rollobahnende beim Aufwickeln und beim Abwickeln der Rollobahn in fester Antriebsverbindung.

Die federelastische Ausgleichseinrichtung ist bevorzugt zwischen der gemeinsamen Kraftübertragungseinrichtung und der Rollowelle und/oder zwischen der gemeinsamen Kraftübertragungseinrichtung und dem ausziehbaren Rollobahnende vorgesehen. Hierdurch ist, wie oben schon erläutert, gewährleistet, dass in jeder Bewegungsrichtung der Rollobahn zwischen der Kraftübertragungseinrichtung und dem Rollobahnende eine Federvorspannung vorgesehen ist. Diese Federvorspannung existiert bei vollständig auf der Rollowelle aufgewickelter Rollobahn, bei bis in die Endstellung abgewickelter Rollobahn und ferner in jeder der Zwischenstellungen zwischen diesen beiden Endpositionen.

Die gemeinsame Kraftübertragungseinrichtung kann über ein erstes Getriebe mit dem aufziehbaren Rollobahnende und über ein zweites Getriebe mit der Rollowelle in Antriebsverbindung stehen. Das erste Getriebe, welches vom Antriebsrad die Antriebsbewegung auf das ausziehbare Rollobahnende überträgt, ist so ausgebildet, dass die Drehbewegung des Antriebsrades in eine translatorische Bewegung gewandelt wird. Hierzu kann eine druck- und zugstabile, jedoch biegsame Schub-/Zugstange, welche vorzugsweise als Bürstenkabel ausgebildet ist, verwendet werden. Das Stangenende ist hierbei fest mit dem ausziehbaren Rollobahnende, an welchem, wie schon erläutert, ein Zugstab vorgesehen sein kann, fest verbunden. Auf diese Weise kann sowohl der Rollobahnauszug als auch das Aufwickeln der Rollobahn gesteuert von der Antriebsbewegung der Antriebseinrichtung, insbesondere dessen Drehbewegung erfolgen. Bei einem Fahrzeugseitenfenster sind an beiden Seitenbegrenzungen des Fahrzeugfensters derartige Getriebe vorgesehen. Die Schub-/Zugstange, insbesondere in Form eines Bürstenkabels ist dabei in kämmenden Eingriff mit dem als Zahnrad ausgebildeten Antriebsrad.

Das erste Getriebe kann auch in Form eines Seilzugs ausgebildet sein, welcher die Drehbewegung der Kraftübertragungseinrichtung in eine translatorische Bewegung des Rollobahnendes wandelt.

Das zweite Getriebe, welches das vom Antriebselement übertragene Drehmoment als Drehbewegung auf die Rollowelle überträgt, kann eine weitere Antriebswelle oder eine einstückige Verlängerung der Antriebswelle sein.

Die Ausgangswelle des Elektromotors der Antriebseinrichtung kann ein weiteres Antriebsrad aufweisen, welches Bestandteile eines weiteren Getriebes ist, das insbesondere ein Bürstenkabel als Schub-/Zugstange aufweist und ein weiteres Rollo, insbesondere Dreieckfensterrollo, wie es beispielsweise aus DE 299 21 860 bekannt ist, auf- und abwickelt.

Anhand der Figuren wird an Ausführungsbeispielen die Erfindung noch näher erläutert.

Es zeigt
- Fig. 1: ein Ausführungsbeispiel der Erfindung, welches im Fondbereich eines Fahrzeugs bei einem Fahrzeugseitenfenster und Dreieckfenster zum Einsatz kommt;
- Fig. 2: in teilweise auseinandergezogener perspektivischer Darstellung eine erste Ausführungsform der Erfindung;
- Fig. 3: eine zweite Ausführungsform der Erfindung; und
- Fig. 4: eine Detaildarstellung bei einer dritten Ausführungsform der Erfindung.

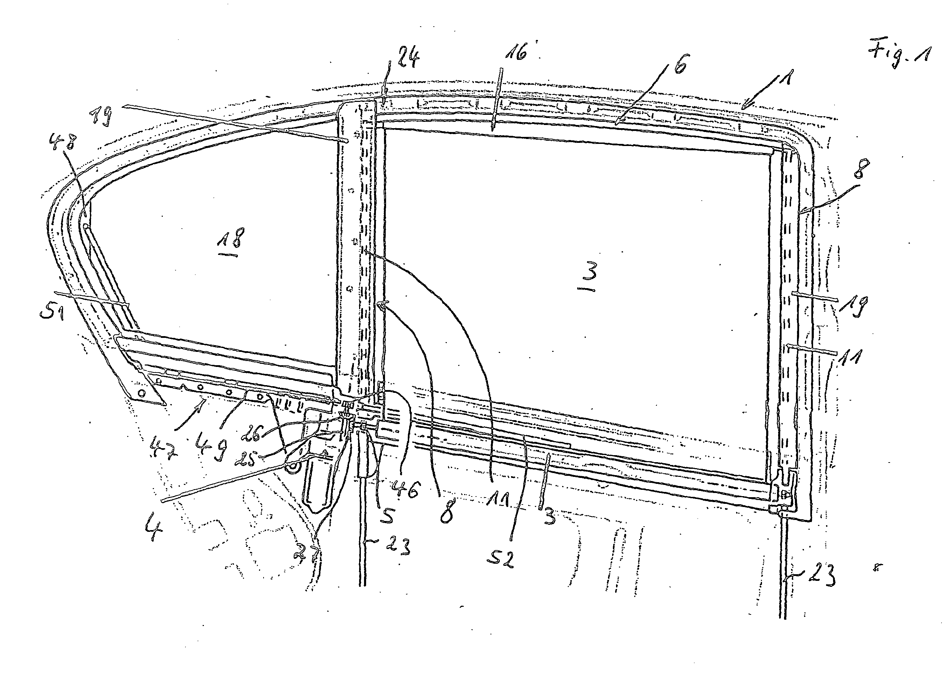

In der Fig. 1 ist der Einbau einer Rollobahn 3 für ein Fahrzeugseitenfenster 1 eines Kraftfahrzeugs dargestellt. Ferner ist eine Dreieckrollobahn 18 dargestellt, welche zum Abdecken eines vom Fahrzeugseitenfenster 1 durch einen Fensterteilungssteg 24 in bekannter Weise abgetrennten Dreieckfensters 20 dient.

Die Erfindung wird zunächst anhand eines Fensterrollos beschrieben, mit welchem das Fahrzeugseitenfenster 1 abgedeckt werden kann. Das Fahrzeugseitenfenster 1 kann in einer Seitentür im Fondbereich eines Kraftfahrzeugs vorgesehen sein.

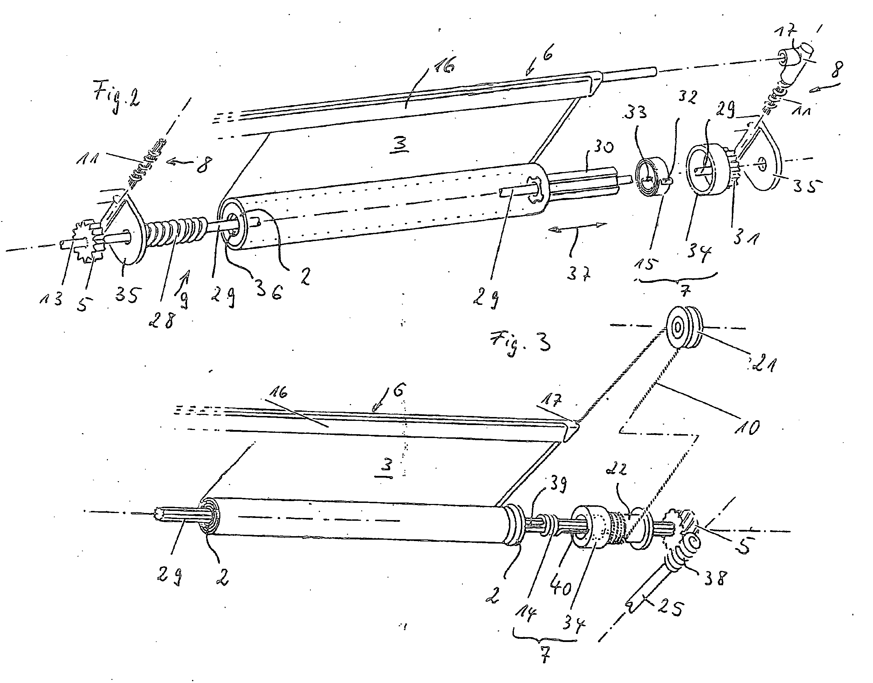

Eine erste Ausführungsform des Fensterrollos ist mit seinen Bestandteilen in der Fig. 2 dargestellt. Das Seitenfensterrollo besitzt eine Antriebseinrichtung 4, welche aus einem elektrisch betriebenen Motor besteht. An einer Ausgangswelle 25 der Antriebseinrichtung 4 bzw. des Elektromotors sitzt ein Kegelrad 26, welches mit einem weiteren Kegelrad 27 kämmt. Das Kegelrad 27 ist drehfest auf einer Antriebswelle 13 befestigt. Es ist jedoch auch möglich, die Antriebswelle 13 als Ausgangswelle der Antriebseinrichtung 4 bzw. des Elektromotors auszubilden. Bei einer derartigen Anordnung können die beiden Kegelräder 26 und 27 entfallen.

Auf der Antriebswelle 13 sitzt drehfest ein Antriebsrad 5, insbesondere Zahnrad. Die Antriebswelle 13, welche auch die Ausgangswelle des Elektromotors sein kann, und das Antriebsrad 5 bilden eine gemeinsame Kraftübertragungseinrichtung. Das Antriebsrad 5 steht in kämmenden Eingriff mit einer biegsamen sowie in Längsrichtung zug- und druckstabilen Schub-/Zugstange, welche vorzugsweise als Bürstenkabel 11 ausgebildet ist. Am oberen Ende des Bürstenkabels 11 ist ein Schlitten 17 vorgesehen. Der Schlitten 17 ist zumindest in Längsrichtung des Bürstenkabels 11 fest mit einem Zugstab 16 verbunden. Der Zugstab 16 ist über die Breite der Rollobahn 3 fest mit dieser verbunden und bildet ein ausziehbares Rollobahnende 6. Der Schlitten 17 und das Bürstenkabel 11 bilden ein erstes Getriebe 8. Wie aus Fig. 1 zu ersehen ist, sind zu beiden Seiten des Fahrzeugseitenfenster 1 derartige erste Getriebe 8 vorgesehen.

Die Führung des Schlittens 17 und des jeweiligen Bürstenkabels 11 erfolgt in Führungsschienen 19, welche entlang einem Fensterrahmenteil an der rechten Seite des Fahrzeugseitenfensters 1 (Fig. 1) und an der linken Seite entlang dem Fensterteilungssteg 24 vorgesehen sind. Derartige Führungsschienen sind bekannt und beispielsweise in DE 299 21 859 U1 beschrieben. Das ausziehbare Rollobahnende wird in beiden Drehrichtungen der Antriebsrichtung 13, d.h. sowohl in Aufwickel- als auch in Abwickelrichtung der Rollobahn 3 über das bzw. die Getriebe 8 angetrieben. Vom ersten Getriebe 8 wird somit die Drehbewegung des Antriebsrades 5 in eine translatorische Bewegung gewandelt und auf das Rollobahnende 6 übertragen.

Wie aus Fig. 2 zu ersehen ist, besitzt die Antriebswelle 13 eine Verlängerung 29. Die Verlängerung 29 der Antriebswelle 13 ist durch eine Mittenbohrung einer Rollowelle 2, auf welche die Rollobahn 3 aufgewickelt ist, geführt. Ferner erstreckt sich die Verlängerung 29 der Antriebswelle 13 noch durch eine Wanderwelle 30, welche drehfest mit der Rollowelle 2 verbunden ist und auf welcher die Rollowelle 2 in axialer Richtung verschiebbar angeordnet ist, wie im einzelnen noch erläutert wird. Am Ende ist die Verlängerung 29 der Antriebswelle 13 drehfest mit einem weiteren Antriebsrad 31 verbunden, das wie das Antriebsrad 5 als Zahnrad ausgebildet sein kann. Beim dargestellten Ausführungsbeispiel steht das in der Fig. 2 rechts dargestellte Bürstenkabel 11, welches die biegsame Schub-/Zugstange bildet, in ständig kämmenden Eingriff mit dem Antriebsrad 31, wie das beim linken Getriebe 8 zwischen dem Bürstenkabel 11 und dem Antriebsrad 5 der Fall ist.

Drehfest mit der Antriebswelle 13 und insbesondere beim dargestellten Ausführungsbeispiel mit der Verlängerung 29 der Antriebswelle 13 ist ein äußeres Federende 32 einer Rollfeder 15, welche auch eine Spiralfeder oder Schraubenfeder sein kann, verbunden. Ein inneres Federende 33 bzw. das andere Federende ist mit der Wanderwelle 30 und somit mit der Rollowelle 2 drehfest verbunden. Um das äußere Federende 32 fest mit der Verlängerung 29 der Antriebswelle 13 zu verbinden, ist eine Federkassette 34 drehfest mit der Verlängerung 29 der Antriebswelle 13 verbunden. Die Roll- bzw. Spiralfeder 15 kann in der Federkassette 34 angeordnet sein und das äußere Federende 32 wird über die Federkassette 34 drehfest mit der Antriebswelle 13 bzw. deren Verlängerung 29 verbunden. Die Rollfeder bzw. Spiralfeder 15 und die Federkassette 34 bilden eine federelastische Ausgleichseinrichtung 7, welche zwischen der Antriebswelle 13 und der Rollowelle 2 wirkt. Da die Antriebswelle 13 über die beiden Getriebe 8 in starrer Antriebsverbindung mit dem ausziehbaren Rollobahnende 6, insbesondere dem Zugstab 16 steht, wirkt die federelastische Ausgleichseinrichtung 7 zwischen der Rollowelle 6 und dem ausziehbaren Rollobahnende 6. Die Feder, insbesondere Rollfeder oder Spiralfeder 15 erzeugt hierzu eine Federvorspannung zwischen der Rollowelle 2 und der Antriebswelle 13 und damit zwischen der Rollowelle 2 und dem Rollobahnende 6, da das Bürstenkabel 11 in seiner Längsrichtung druck- und zugstabil ausgebildet ist. Es wird hierdurch erreicht, dass die Rollobahn 3 zwischen ihrem inneren, mit der Rollowelle 2 befestigten Ende oder dem aufgewickelten Rolloteil und dem äußeren, nämlich dem ausziehbaren Rollobahnende 6 ständig unter einer Vorspannkraft steht. Diese Vorspannkraft ist sowohl bei vollständig auf der Rollowelle 2 aufgewickelter Rollobahn 3 als auch bei bis in die ausgezogene Endstellung der Rollobahn 3 wirksam. Auch in jeder dazwischenliegenden Position der Rollobahn 3 wirkt diese Vorspannkraft.

Beim dargestellten Ausführungsbeispiel der Fig. 2 ist die Rollowelle 2 über die Verlängerung 29 der Antriebswelle 13 mittels Lagerstellen 35, welche im Bereich der beiden Getriebe 8 vorgesehen sind, fest am Fahrzeugaufbau gelagert. Die Lagerstellen 35 können Bestandteile eines Gehäuses sein, in welchem das Ausführungsbeispiel des Fensterrollos unterhalb und in der Nähe der Fensterbrüstung angeordnet ist. Die Rollowelle 2 ist über die Verlängerung 29 der Antriebswelle 13 drehbar in den Lagerstellen 35 gelagert. Mit einer der beiden Lagerstellen 35, in der Fig. 2 der linken Lagerstelle 35, ist drehfest ein Außengewinde 28 verbunden. Das Außengewinde 28 kann auf einer Hohlspindel angeordnet sein, durch welche die Verlängerung 29 der Antriebswelle 13 sich erstreckt. Das Außengewinde 28 greift in ein Innengewinde 36 der Rollowelle 2 ein. Auf diese Weise wird erreicht, dass beim Abwickeln und Aufwickeln der Rollobahn 3 sich die Rollowelle 2 in axialer Richtung entlang der Antriebswelle 13 bzw. der Verlängerung 29 der Antriebswelle 13 bewegen kann (Doppelpfeil 37 in Fig. 2). Die Rollowelle 2 bewegt sich dabei auf der drehfest mit der Verlängerung 29 der Antriebswelle verbundenen Wanderwelle 30. Wie schon erläutert, ist die Wanderwelle 30 drehfest, jedoch axial verschiebbar auf der Rollowelle 2 gelagert. Die Wanderwelle 30 kann hierzu einen aus Fig. 2 zu ersehenden sternförmigen bzw. kleeblattförmigen Querschnitt aufweisen. Die Wanderwelle 30 kann auch einen anderen von der Kreisform abweichenden Querschnitt aufweisen. Die Außenfläche der Wanderfläche 30 greift dabei in eine formmäßig angepasste, axial sich erstreckende Bohrung der Rollowelle 2 ein. Durch die axiale Beweglichkeit der Rollowelle 2 können ein Schrägauszug und/oder unterschiedliche Breiten der Rollobahn 3 beim Auf- und Abwickeln kompensiert werden.

Die Wanderwelle 30, welche drehfest mit der Verlängerung 29 der Antriebswelle 13 verbunden ist, bildet mit der Verlängerung 29 ein zweites Getriebe zwischen der gemeinsamen Kraftübertragungseinrichtung, welche vom Zahnrad und der Antriebswelle 13 gebildet wird, und der Rollowelle 2. Beim dargestellten Ausführungsbeispiel der Fig. 2 befindet sich die gemeinsame Kraftübertragungseinrichtung, welche vom Antriebsrad 5 und der Antriebswelle 13 gebildet wird, am einen Ende der Rollowelle 2 und die federelastische Ausgleichseinrichtung 7 befindet sich am anderen Ende der Rollowelle 2. Es ist jedoch auch möglich, die gemeinsame Kraftübertragungseinrichtung bestehend aus Antriebswelle 13 und Antriebsrad 5 sowie die federelastische Ausgleichseinrichtung 7 am gleichen Ende der Rollowelle 2 vorzusehen, wie es beim Ausführungsbeispiel der Fig. 3 der Fall ist.

Bei diesem Ausführungsbeispiel ist zwischen der Antriebswelle 13 und der Ausgangswelle 25 der nicht näher dargestellten Antriebseinrichtung, insbesondere des Elektromotors ein Schneckenradsatz vorgesehen. Die Antriebseinrichtung kann so ausgebildet sein wie die in Fig. 1 dargestellte Antriebseinrichtung 4. Der Schneckenradsatz besteht aus einem fest auf der Ausgangswelle 25 sitzenden Schneckenrad 38 und dem als Schneckenrad ausgebildeten Antriebsrad 5, welches fest mit der Antriebswelle 13 verbunden ist. Das Antriebsmoment der Antriebseinrichtung wird über den Schneckenradsatz auf die Antriebswelle 13 in beiden Drehrichtungen übertragen. Auf der Antriebswelle 13 sitzt drehfest eine Seilspule 22, auf welche ein Seil 10 auf- und abgewickelt werden kann. Das Seil 10 ist über eine Umlenkrolle 21 geführt und mit dem Schlitten 17, der mit dem Zugstab 16 am ausziehbaren Rollobahnende 6 verbunden ist, fest, beispielsweise durch Seilklemmung verbunden. Die Seilspule 22, das Seil 10, die Umlenkrollo 21 und der Schlitten 17 bilden das erste Getriebe 8, über welches das von der Antriebseinrichtung 4 gelieferte Antriebsmoment in beiden Drehrichtungen, d.h. beim Aufwickeln und Abwickeln der Rollobahn 3 auf das Rollobahnende 6 übertragen wird.

Das zweite Getriebe 9 wird von der Verlängerung 29 der Antriebswelle 13, welche eine von der Kreisform abweichende Umfangsfläche aufweist, sowie eine entsprechend geformte Durchgangsbohrung der Rollowelle 2 gebildet. Die Lagerung der Antriebswelle 13 und ihrer Verlängerung 29 kann in der gleichen Weise erfolgen, wie es beim Ausführungsbeispiel der Fig. 2 gezeigt ist.

Die federelastische Ausgleichseinrichtung 7 wird beim Ausführungsbeispiel der Fig. 3 von der als Schraubenfeder 14 ausgebildeten Feder gebildet. Ein Federende 39 der Feder 14 ist mit der Rollowelle 2, von welcher ein seitlicher Begrenzungsflansch 2 am rechten Ende dargestellt ist, verbunden. Ein zweites Federende 40 der Feder 14 ist drehfest mit der Antriebswelle 13 oder der Federkassette 34, welche drehfest an der Antriebswelle 13 angeordnet ist, verbunden. Die Feder 14, welche auch als Rollfeder oder Spiralfeder ausgebildet sein kann, wird bevorzugt in der Federkassette 34 angeordnet. Die hierdurch gebildete federelastische Ausgleichseinrichtung 7, welche zwischen der Antriebswelle 13 bzw. deren Verlängerung 29 und der Rollowelle 2 wirkt, hat die gleiche Funktion wie die anhand der Fig. 2 erläuterte federelastische Ausgleichseinrichtung 7. Beim Ausführungsbeispiel der Fig. 3 sind die Antriebseinrichtung sowie die gemeinsame Kraftübertragungseinrichtung und die federelastische Ausgleichseinrichtung 7 am gleichen Ende der Rollowelle 2 angeordnet. Es ist jedoch auch eine getrennte Anordnung der federelastischen Ausgleichseinrichtung 7 am anderen Ende der Rollowelle 2, wie es beim Ausführungsbeispiel der Fig. 2 der Fall ist, möglich.

Bei dem in der Fig. 3 dargestellten Ausführungsbeispiel sind die linken Enden der Rollowelle 2 und der Rollobahn 3 sowie des Zugstabes 16 nicht dargestellt. An diesem linken Ende ist in gleicher Weise wie am rechten Ende das als Seilzug ausgebildete Getriebe 8 vorgesehen. Die Antriebswelle 13 ist als gezahnte Antriebswelle ausgebildet, welche durch eine entsprechend geformte Bohrung der Rollowelle hindurchgesteckt ist. Am linken Ende ist, wie beim Ausführungsbeispiel der Fig. 2, eine ortsfeste Spindel mit Außengewinde 28 vorgesehen, welche in ein dem Innengewinde 36 der Fig. 2 entsprechendes Innengewinde der Rollowelle 2 eingreift. Hierdurch wird, wie schon erläutert, eine axiale Verschiebbarkeit der Rollowelle 2 entlang der Antriebswelle 13 erreicht. Anstelle der Schraubenfeder kann, wie beim Ausführungsbeispiel der Fig. 2, eine Rollfeder oder Spiralfeder zum Einsatz kommen.

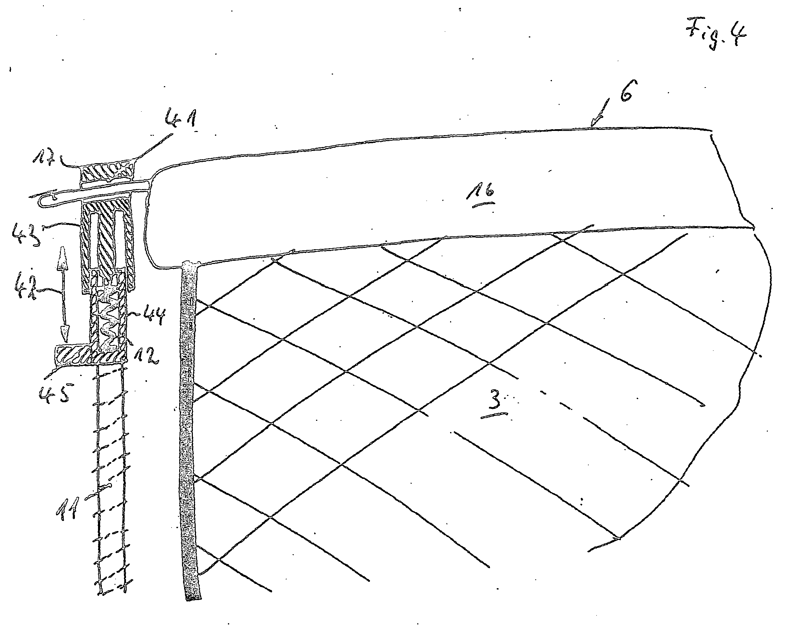

In der Fig. 4 ist eine weitere Ausführungsform der federelastischen Ausgleichseinrichtung 7 dargestellt. Diese ist zwischen der vorzugsweise als Bürstenkabel 11 ausgebildeten in Längsrichtung zug- und druckstabilen Zug-/Schubstange, insbesondere dem Stangen- bzw. Kabelende und einer Mitnahmestelle 41, in welcher der Zugstab 16 am ausziehbaren Rollobahnende 6 mit der Schubstange verbunden ist, angeordnet. Die Ausgleichseinrichtung 7 beinhaltet hierzu eine Druckfeder 12, welche vorzugsweise als Schraubendruckfeder ausgebildet ist und zwei in axialer Richtung der Schub-/Zugstange, insbesondere des Bürstenkabels 11 gegeneinander verschiebbaren (Doppelpfeil 42) Koppelstücken 43 und 44. Die beiden Koppelstücke 43 und 44 sind hülsenförmig ausgebildet, wobei eines der beiden Koppelstücke (das Koppelstück 43 in der Fig. 4) eine zusätzliche Federführung für die Druckfeder 12 aufweist. Das Koppelstück 43 ist fest mit dem Zugstab 16 verbunden und beinhaltet die Mitnehmerstelle 41. Das andere Koppelstück 44 ist fest mit dem Ende des Bürstenkabels 11 verbunden. Die Gegeneinanderbewegung der Koppelstücke 43, 44 erfolgt gegen die Vorspannkraft der Feder 12. Zusätzlich kann eines der beiden Koppelstücke (in der Fig. 4 das Koppelstück 44) einen Anschlag 45 aufweisen, um den Federweg, insbesondere beim Zusammendrücken der Druckfeder 12 zu begrenzen. Vorzugsweise sind an beiden Seiten der Rollobahn 3 federelastische Ausgleichseinrichtungen 7, wie sie in der Fig. 4 für die linke Rollobahnseite dargestellt ist, vorgesehen.

Die in der Fig. 4 dargestellte federelastische Ausgleichseinrichtung kann ferner als Einklemmschutz, insbesondere bei bis in die obere Endstellung ausgezogener Rollobahn 3 dienen.

Es ist auch möglich, sowohl zwischen der Antriebswelle 13 eine federelastische Ausgleichseinrichtung 7, wie sie in den Fig. 2 oder 3 dargestellt ist, als auch eine federelastische Ausgleichseinrichtung 7, wie sie in der Fig. 4 dargestellt ist, beim Fensterrollo vorzusehen. Es kann jedoch auch nur eine der federelastischen Ausgleichseinrichtungen, welche anhand der Fig. 2, 3 und 4 erläutert wurden, vorgesehen sein.

Das Antriebsmoment, insbesondere Drehmoment der Antriebseinrichtung 4 kann ferner auf eine weitere Rollobahn 18, welche beim dargestellten Ausführungsbeispiel zum Abdecken eines Dreieckfensters 20 dient, übertragen werden. Das Dreieckfenster 20 ist in bekannter Weise mittels eines Fensterteilungsstegs 24, an welchem die Führungsschiene 19 vorgesehen ist, vom Seitenfenster 1 getrennt. Das Antriebs- bzw. Drehmoment der Antriebseinrichtung 4 wird über ein drittes Getriebe 47 auf die zusätzliche Rollobahn 18, insbesondere auf das ausziehbare Rollobahnende 48 übertragen. Hierzu kann das dritte Getriebe 47 ein Antriebsrad 46 aufweisen, welches eine mit dem ausziehbaren Rollobahnende 48 verbundene druck- und zugstabile sowie biegsame Schub-/Zugstange, insbesondere Bürstenkabel 49 im wesentlichen translatorisch antreibt. Die Rollobahn 18 ist an einer nicht näher dargestellten, im Bereich des Fensterteilungsstegs 24 drehbar gelagerten Rollowelle aufwickelbar und von der Rollowelle abwickelbar. Die Achse der Rollowelle erstreckt sich im wesentlichen parallel zum Fensterteilungssteg 24. Die Anordnung am Fensterteilungssteg 24 kann in der Weise erfolgen, wie es aus DE 299 21 860 U1 bekannt ist.

Das Antriebsrad 46 des dritten Getriebes 47 wird von der Ausgangswelle 25 der Antriebseinrichtung 4 angetrieben.

Hierzu kann das Antriebsrad 46 drehfest mit der Ausgangswelle 25 verbunden sein.

Das dritte Getriebe 47 kann ferner einen Auszugshebel 51 aufweisen, der mit dem ausziehbaren Rollobahnende 48 verbunden ist. Der Auszugshebel 51 wird von der Schub-/Zugstange, welche, wie schon erläutert, als Bürstenkabel 49 ausgebildet sein kann, entlang einer Führungsbahn 50, welche an der Unterkante des Dreieckfensters 20 angeordnet ist, geführt und in Auszugsrichtung und Aufrollrichtung bewegt. Die Rolloeinrichtung für das Dreieckfenster 20 kann in der Weise ausgebildet sein, wie es aus DE 299 21 860 U1 bekannt ist.

Beim dargestellten Ausführungsbeispiel ist die Ausgangswelle 25 über ein Kegelradgetriebe, bestehend aus den beiden Kegelrädern 26 und 27 in Drehantriebsverbindung mit der Antriebswelle 13. Hierzu ist das Kegelrad 27 drehfest mit der Antriebswelle 13 und das Kegelrad 26 drehfest mit der Ausgangswelle 25 verbunden. Die Ausgangswelle 25 und die Antriebswelle 13 sind etwa im rechten Winkel zueinander angeordnet. Auf diese Weise erfolgt die Übertragung des von der Antriebseinrichtung 4 gelieferten Drehmoments auf die Antriebswelle 13, welche in der gemeinsamen Kraftübertragungseinrichtung zur Betätigung der Rollobahn 3 vorgesehen ist. Wie oben schon erläutert, wird durch die Ausgangswelle 25 ferner das zum dritten Getriebe 47 gehörige Antriebsrad 46 angetrieben. Dieses ist vorzugsweise als Zahnrad ausgebildet, mit dessen Zahnung das Bürstenkabel 49 kämmt.

Durch diese Anordnung erreicht man eine Antriebseinrichtung, mit welcher sowohl die Rollobahn 18, welche insbesondere zur Abdeckung des Dreieckfensters 20 dient, als auch die Rollobahn 3, welche zur Abdeckung des etwa rechteckigen Seitenfensters 1 dient, in beiden Drehrichtungen beim Aufrollen und Abrollen bzw. Ausziehen betätigt werden. Die erforderlichen Antriebskräfte werden von nur einem Elektromotor mit einer Ausgangswelle 25 geliefert. In bevorzugter Weise ist die Antriebseinrichtung, wie aus der Fig. 1 zu ersehen ist, im Bereich des unteren Endes des Fensterteilungssteges 24 an der Fahrzeugtür befestigt.

Bürstenkabelausläufe 23 für die beiden Getriebe 8 und ein Bürstenkabelauslauf 52 für das Bürstenkabel 49 des dritten Getriebes 47 sind in raumsparender Anordnung unterhalb der Türverkleidung vorgesehen. Die Bürstenkabelausläufe 23 und 52 können auch gebogen sein und in den Bereichen der Tür angeordnet werden, in denen hierfür Platz zur Verfügung steht.

Die Erfindung wurde im Zusammenhang mit Rollobahnen 3 und 18 erläutert, welche zum Abdecken von Seitenfenstern, insbesondere von in hinteren Fahrzeugtüren angeordneten Seitenfenstern dienen. Es ist auch möglich, die Erfindung bei einem Fensterrollo zum Abdecken der Heckscheibe in einem Fahrzeug zur Anwendung zu bringen.

### [Bezugszeichenliste]

- 1: Fahrzeugseitenfenster
- 2: Rollowelle
- 3: Rollobahn
- 4: Antriebseinrichtung
- 5: Antriebsrad
- 6: Rollobahnende
- 7: federelastische Ausgleichseinrichtung
- 8: erstes Getriebe
- 9: zweites Getriebe
- 10: Seil
- 11: Bürstenkabel
- 12: Druckfeder
- 13: Antriebswelle
- 14: Schraubenfeder
- 15: Rollfeder bzw. Spiralfeder
- 16: Zugstab
- 17: Schlitten
- 18: Dreieckrollobahn
- 19: Führungsschiene
- 20: Dreieckfenster
- 21: Umlenkrolle
- 22: Seilspule
- 23: Bürstenkabelauslauf
- 24: Fensterteilungssteg
- 25: Ausgangswelle
- 26: Kegelrad
- 27: Kegelrad
- 28: Außengewinde
- 29: Verlängerung der Antriebswelle
- 30: Wanderwelle
- 31: Antriebsrad
- 32: äußeres Federende
- 33: inneres Federende
- 34: Federkassette
- 35: Lagerstelle
- 36: Innengewinde
- 37: Bewegungsrichtungen der Rollowelle
- 38: Schneckenrad
- 39: Federende
- 40: Federende
- 41: Mitnahmestelle
- 42: Koppelstückbewegung
- 43: Koppelstück
- 44: Koppelstück
- 45: Anschlag
- 46: Antriebsrad
- 47: drittes Getriebe
- 48: ausziehbares Rollobahnende des Dreieckfensterrollos
- 49: druck- und zugstabile Stange (Bürstenkabel)
- 50: Führungsbahn
- 51: Auszugshebel

## Patentansprüche

1. Fensterrollo für ein Fahrzeugfenster mit einer Rollowelle, einer Rollobahn, welche auf die Rollowelle auf- und abwickelbar ist, und einer Antriebseinrichtung, welche eine gemeinsame Kraftübertragungseinrichtung (5, 13) mit einer Antriebswelle (13) aufweist, die beim Auf- und Abwickeln der Rollobahn (3) sowohl mit der Rollowelle (2) als auch mit dem ausziehbaren Rollobahnende (6) in Antriebsverbindung steht, wobei zwischen der gemeinsamen Kraftübertragungseinrichtung (5, 13) und dem ausziehbaren Rollobahnende (6) eine federelastische Ausgleichseinrichtung (7) vorgesehen ist, wobei die Rollowelle (2) drehfest mit der Antriebswelle (13) angeordnet ist, **dadurch gekennzeichnet, dass** die Rollowelle (2) axial verschiebbar gegenüber der Antriebswelle (13) angeordnet ist, wobei die Rollowelle (2) ein Innengewinde (36) aufweist, welches drehbar auf einem am Fahrzeug, insbesondere an der Fahrzeugtür ortsfest angeordneten Außengewinde (28) sitzt.

2. Fensterrollo nach Anspruch 1,
**dadurch gekennzeichnet, dass** die federelastische Ausgleichseinrichtung (7) zwischen der gemeinsamen Kraftübertragungseinrichtung (5, 13) und der Rollowelle (2) und/oder zwischen der gemeinsamen Kraftübertragungseinrichtung (5, 13) und dem ausziehbaren Rollobahnende (6) vorgesehen ist.

3. Fensterrollo nach Anspruch 1 oder 2,
**dadurch gekennzeichnet, dass** die gemeinsame Kraftübertragungseinrichtung (5, 13) über ein erstes Getriebe (8) mit dem ausziehbaren Rollobahnende (6) und über ein zweites Getriebe (9) mit der Rollowelle (2) in Antriebsverbindung steht.

4. Fensterrollo nach einem der Ansprüche 1 bis 3,
**dadurch gekennzeichnet, dass** die gemeinsame Kraftübertragungseinrichtung (5, 13) eine gemeinsame Antriebswelle (13) und ein drehfest damit verbundenes Antriebsrad (5) aufweist, wobei die gemeinsame Kraftübertragungseinrichtung (5, 13) ein von der Antriebseinrichtung (4) erzeugtes Drehmoment über das erste Getriebe (8) und das zweite Getriebe (9) überträgt.

5. Fensterrollo nach einem der Ansprüche 1 bis 4,
**dadurch gekennzeichnet, dass** das von der gemeinsamen Kraftübertragungseinrichtung (5, 13) übertragene Drehmoment von der ersten Getriebeeinrichtung (8) in eine auf das ausziehbare Rollobahnende (6) übertragene translatorische Bewegung gewandelt wird.

6. Fensterrollo nach einem der Ansprüche 1 bis 5,
**dadurch gekennzeichnet, dass** das von der gemeinsamen Kraftübertragungseinrichtung (5, 13) übertragene Drehmoment von der zweiten Getriebeeinrichtung (9) als Drehbewegung auf die Rollowelle (2) übertragen wird.

7. Fensterrollo nach einem der Ansprüche 1 bis 6,
**dadurch gekennzeichnet, dass** das erste Getriebe (8) einen entlang einer Fensterseite geführten Seilzug (10, 21, 22) oder eine in axialer Richtung zug- und druckstabile sowie biegsame Zug-/Schubstange, insbesondere Bürstenkabel (11) aufweist.

8. Fensterrollo nach einem der Ansprüche 1 bis 7,
**dadurch gekennzeichnet, dass** die federelastische Ausgleichseinrichtung (7) zwischen dem ersten Getriebe (8), insbesondere zwischen dem Seilzug (10, 21, 22) oder der in axialer Richtung druck- und zugstabilen sowie biegsamen Zug-/Druckstange, insbesondere dem Bürstenkabel (11) und dem Rollobahnende (6) angeordnet ist.

9. Fensterrollo nach Anspruch 8,
**dadurch gekennzeichnet, dass** die federelastische Ausgleichseinrichtung (7) eine Druckfeder (12) aufweist.

10. Fensterrollo nach Anspruch 8 oder 9,
**dadurch gekennzeichnet, dass** das Rollobahnende (6) mit dem ersten Getriebe (8) über zwei Koppelstücke (43, 44), welche unter der Vorspannung der Druckfeder (12) stehen, verbunden ist.

11. Fensterrollo nach einem der Ansprüche 1 bis 10,
**dadurch gekennzeichnet, dass** das zweite Getriebe (9) eine einstückige Verlängerung (29) der Antriebswelle (13) aufweist.

12. Fensterrollo nach einem der Ansprüche 1 bis 11,
**dadurch gekennzeichnet, dass** die federelastische Ausgleichseinrichtung (7) zwischen der Antriebswelle (13) und der Rollowelle (2) angeordnet ist.

13. Fensterrollo nach Anspruch 12,
**dadurch gekennzeichnet, dass** die federelastische Ausgleichseinrichtung (7) eine Schraubenfeder (14) oder Roll- oder Spiralfeder (15) aufweist.

14. Fensterrollo nach einem der Ansprüche 1 bis 13,
**dadurch gekennzeichnet, dass** das Rollobahnende (6) einen Zugstab (16) aufweist, der an beiden Enden mit Schlitten (17) verbunden ist, auf die das vom jeweiligen ersten Getriebe (8) übertragene Antriebskraft übertragen wird.

15. Fensterrollo nach einem der Ansprüche 1 bis 14,
**dadurch gekennzeichnet, dass** die Antriebswelle (13) oder die einstückige Verlängerung (29) der Antriebswelle (13) in einer Durchgangsbohrung der Rollowelle (2) angeordnet ist.

16. Fensterrollo nach einem der Ansprüche 1 bis 15,
**dadurch gekennzeichnet, dass** die Rollowelle (2) am einen Wellenende am Außengewinde (28) und am anderen Wellenende an der Antriebswelle (13) axial verschiebbar gelagert ist.

17. Fensterrollo nach einem der Ansprüche 1 bis 16,
**dadurch gekennzeichnet, dass** zur drehfesten und axial verschiebbaren Lagerung der Rollowelle (2) an der Antriebswelle (13) eine hülsenförmige Wanderwelle (30) vorgesehen ist, an welcher die Rollowelle (2) drehfest und axial verschiebbar gelagert ist, und dass die Antriebswelle (13) in der Durchgangsbohrung der hülsenförmigen Wanderwelle (30) angeordnet ist, wobei die federelastische Ausgleichseinrichtung (7) zwischen der Antriebswelle (13) oder der einstückigen Verlängerung (29) der Antriebswelle (13) und der Wanderwelle (30) vorgesehen ist.

18. Fensterrollo nach einem der Ansprüche 1 bis 17,
**dadurch gekennzeichnet, dass** die gemeinsame Kraftübertragungseinrichtung (5, 13) am einen Ende der Rollowelle (2) und die federelastische Ausgleichseinrichtung (7) am anderen Ende der Rollowelle (2) angeordnet sind.

19. Fensterrollo nach einem der Ansprüche 1 bis 17,
**dadurch gekennzeichnet, dass** die gemeinsame Kraftübertragungseinrichtung (5, 13) und die federelastische Ausgleichseinrichtung (7) am gleichen Ende der Rollowelle (2) angeordnet sind.

20. Fensterrollo nach einem der Ansprüche 1 bis 19,
**dadurch gekennzeichnet, dass** das Drehmoment der Antriebseinrichtung (14) ferner auf eine weitere Rollobahn (18) übertragbar ist.

21. Fensterrollo nach einem der Ansprüche 1 bis 20,
**dadurch gekennzeichnet, dass** die eine Rollobahn (3) zum Abdecken eines Fahrzeugseitenfenster (1) und die andere Rollobahn (18) zum Abdecken eines vom Seitenfenster (1) mittels eines Fensterteilungsstegs (24) getrennten Dreiecksfensters (20) dient.

22. Fensterrollo nach einem der Ansprüche 1 bis 21,
**dadurch gekennzeichnet, dass** das Antriebsmoment der Antriebseinrichtung (4) über ein drittes Getriebe (47) auf die zusätzliche Rollobahn (18), insbesondere auf das ausziehbare Rollobahnende (48) der zusätzlichen Rollobahn (18) übertragen wird.

23. Fensterrollo nach Anspruch 22,
**dadurch gekennzeichnet, dass** das dritte Getriebe (47) ein Antriebsrad (46), welches eine mit dem ausziehbaren Rollobahnende (48) verbundene druck- und zugstabile sowie biegsame Schub-/Zugstange, insbesondere ein Bürstenkabel (49) im wesentlichen translatorisch antreibt, aufweist.

24. Fensterrollo nach einem der Ansprüche 21 bis 23,
**dadurch gekennzeichnet, dass** die Rollobahn (18) auf eine im Bereich des Fensterteilungssteges (24) gelagerte Rollowelle aufwickelbar und von der Rollowelle abwickelbar ist.

25. Fensterrollo nach einem der Ansprüche 21 bis 24,
**dadurch gekennzeichnet, dass** das dritte Getriebe (47) ferner einen Auszugshebel (51) aufweist, der von der druck- und zugstabilen Schub-/Zugstange, insbesondere dem Bürstenkabel (49) entlang einer Führungsbahn (50), welche an der Unterkante des Dreieckfensters (20) angeordnet ist, geführt und bewegt wird.

26. Fensterrollo nach einem der Ansprüche 1 bis 25,
**dadurch gekennzeichnet, dass** die Ausgangswelle (25) der Antriebseinrichtung (4) über ein Kegelradgetriebe (26, 27) an die gemeinsame Kraftübertragungseinrichtung (5, 13) angeschlossen ist, und dass auf der Ausgangswelle (25) ferner das Antriebsrad (46) des dritten Getriebes (47) drehfest angeordnet ist.

27. Fensterrollo nach Anspruch 26,
**dadurch gekennzeichnet, dass** an der Ausgangswelle (25) ein Kegelrad (27) und an der Antriebswelle (13) ein damit kämmendes weiteres Kegelrad (26) befestigt sind.

28. Fensterrollo nach einem der Ansprüche 1 bis 27,
**dadurch gekennzeichnet, dass** die Antriebseinrichtung (4) im Bereich des unteren Endes des Fensterteilungssteges (24) an der Fahrzeugtür befestigt ist.

## Claims

1. A window blind for a vehicle window comprising a roller blind shaft, a blind web which can be wound up and down on to the roller blind shaft, and a drive device having a common force transmission device (5, 13) with a drive shaft (13) which when the blind web (3) is wound up and down is drivingly connected both to the roller blind shaft (2) and also to the extensible end (6) of the blind web, wherein provided between the common force transmission device (5, 13) and the extensible end (6) of the blind web is a resilient compensating device (7), wherein the roller blind shaft (2) is arranged non-rotatably with the drive shaft (13), **characterised in that** the roller blind shaft (2) is arranged axially displaceably with respect to the drive shaft (13), wherein the roller blind shaft (2) has a female screwthread (36) which is carried rotatably on a male screwthread (28) arranged stationarily on the vehicle, in particular the vehicle door.

2. A window blind according to claim 1 **characterised in that** the resilient compensating device (7) is provided between the common force transmission device (5, 13) and the roller blind shaft (2) and/or between the common force transmission device (5, 13) and the extensible end (6) of the blind web.

3. A window blind according to claim 1 or claim 2 **characterised in that** the common force transmission device (5, 13) is drivingly connected by way of a first transmission (8) to the extensible end (6) of the blind web and by way of a second transmission (9) to the roller blind shaft (2).

4. A window blind according to one of claims 1 to 3 **characterised in that** the common force transmission device (5, 13) has a common drive shaft (13) and a drive wheel (5) non-rotatably connected thereto, wherein the common force transmission device (5, 13) transmits a torque produced by the drive device (4) by way of the first transmission (8) and the second transmission (9).

5. A window blind according to one of claims 1 to 4 **characterised in that** the torque transmitted by the common force transmission device (5, 13) is converted by the first transmission device (8) into a translatory movement which is transmitted to the extensible end (6) of the blind web.

6. A window blind according to one of claims 1 to 5 **characterised in that** the torque transmitted by the common force transmission device (5, 13) is transmitted by the second transmission device (9) to the roller blind shaft (2) as a rotary movement.

7. A window blind according to one of claims 1 to 6 **characterised in that** the first transmission (8) has a cable mechanism (10, 21, 22) guided along one side of the window or a pull/push rod which in the axial direction is stable in respect of pulling and pushing and flexible, in particular a brush cable (11).

8. A window blind according to one of claims 1 to 7 **characterised in that** the resilient compensating device (7) is arranged between the first transmission (8), in particular between the cable mechanism (10, 21, 22) or the pull/push rod which in the axial direction is stable in respect of pushing and pulling and flexible, in particular the brush cable (11), and the end (6) of the blind web.

9. A window blind according to claim 8 **characterised in that** the resilient compensating device (7) has a compression spring (12).

10. A window blind according to claim 8 or claim 9 **characterised in that** the end (6) of the blind web is connected to the first transmission (8) by way of two coupling portions (43, 44) which are subjected to the biasing force of the compression spring (12).

11. A window blind according to one of claims 1 to 10 **characterised in that** the second transmission (9) has an integral extension (29) of the drive shaft (13).

12. A window blind according to one of claims 1 to 11 **characterised in that** the resilient compensating device (7) is arranged between the drive shaft (13) and the roller blind shaft (2).

13. A window blind according to claim 12 **characterised in that** the resilient compensating device (7) has a coil spring (14) or a rolling or spiral spring (15).

14. A window blind according to one of claims 1 to 13 **characterised in that** the end (6) of the blind web has a pull bar (16) connected at both ends to sliders (17) to which the drive force transmitted by the respective first transmission (8) is transmitted.

15. A window blind according to one of claims 1 to 14 **characterised in that** the drive shaft (13) or the integral extension (29) of the drive shaft (13) is arranged in a through bore in the roller blind shaft (2).

16. A window blind according to one of claims 1 to 15 **characterised in that** the roller blind shaft (2) is axially displaceably supported at one end of the shaft at the male screwthread (22) and at the other end of the shaft at the drive shaft (13).

17. A window blind according to one of claims 1 to 16 **characterised in that** provided for non-rotatably and axially displaceably supporting the roller blind shaft (2) on the drive shaft (13) there is a sleeve-shaped travelling shaft (30) on which the roller blind shaft (2) is non-rotatably and axially displaceably supported and that the drive shaft (13) is arranged in the through bore in the sleeve-shaped travelling shaft (30), wherein the resilient compensating device (7) is provided between the drive shaft (13) or the integral extension (29) of the drive shaft (13) and the travelling shaft (30).

18. A window blind according to one of claims 1 to 17 **characterised in that** the common force transmission device (5, 13) is arranged at the one end of the roller blind shaft (2) and the resilient compensating device (7) is arranged at the other end of the roller blind shaft (2).

19. A window blind according to one of claims 1 to 17 **characterised in that** the common force transmission device (5, 13) and the resilient compensating device (7) are arranged at the same end of the roller blind shaft (2).

20. A window blind according to one of claims 1 to 19 **characterised in that** the torque of the drive device (14) can also be transmitted to a further blind web (18).

21. A window blind according to one of claims 1 to 20 **characterised in that** the one blind web (3) serves to cover a vehicle side window (1) and the other blind web (18) serves to cover a triangular window (20) separated from the side window (1) by means of a window divider bar (24).

22. A window blind according to one of claims 1 to 21 **characterised in that** the drive moment of the drive device (4) is transmitted by way of a third transmission (47) to the additional blind web (18), in particular to the extensible end (48) of the additional blind web (18).

23. A window blind according to claim 22 **characterised in that** the third transmission (47) has a drive wheel (46) which drives substantially in a translatory movement a push/pull rod which is connected to the extensible end (48) of the blind web and which is stable in respect of pushing and pulling and flexible, in particular a brush cable (49).

24. A window blind according to one of claims 21 to 23 **characterised in that** the blind web (18) can be wound on to a roller blind shaft mounted in the region of the window divider bar (24) and can be unwound from the roller blind shaft.

25. A window blind according to one of claims 21 to 24 **characterised in that** the third transmission (47) further has an extension lever (51) which is guided and moved by the push/pull rod which is stable in respect of pushing and pulling, in particular the brush cable (49), along a guide path (50) arranged at the lower edge of the triangular window (20).

26. A window blind according to one of claims 1 to 25 **characterised in that** the output shaft (25) of the drive device (4) is connected to the common force transmission device (5, 13) by way of a bevel gear transmission (26, 27) and that in addition the drive wheel (46) of the third transmission (47) is arranged non-rotatably on the output shaft (25).

27. A window blind according to claim 26 **characterised in that** a bevel gear (27) is fixed to the output shaft (25) and fixed to the drive shaft (13) is a further bevel gear (26) meshing therewith.

28. A window blind according to one of claims 1 to 27 **characterised in that** the drive device (4) is fixed in the region of the lower end of the window divider bar (24) to the vehicle door.

## Revendications

1. Store pour une fenêtre de véhicule, comprenant un arbre de store, une bande de store qui s'enroule sur l'arbre de store et s'en déroule et un dispositif d'entraînement, qui a un dispositif (5, 13) commun de transmission de force ayant un arbre (13) d'entraînement qui, lors de l'enroulement et du déroulement de la bande (3) de store, est en liaison d'entraînement à la fois avec l'arbre (2) de store et avec l'extrémité (6) étirable de la bande de store, un dispositif (7) de compensation, élastique comme un ressort, étant prévu entre le dispositif (5, 13) de commun de transmission de force et l'extrémité (6) étirable de la bande de store, l'arbre (2) de store étant monté solidaire en rotation de l'arbre (13) d'entraînement,
**caractérisé en ce que** l'arbre (2) de store est monté coulissant axialement par rapport à l'arbre (13) d'entraînement, l'arbre (2) de store ayant un taraudage (36) qui tourne sur un filetage (28) monté fixe sur le véhicule, notamment sur la portière du véhicule.

2. Store de fenêtre suivant la revendication 1,
**caractérisé en ce que** le dispositif (7) de compensation, ayant l'élasticité d'un ressort, est prévu entre le dispositif (5, 13) commun de transmission de force et l'arbre (2) de store et/ou entre le dispositif (5, 13) commun de transmission de force et l'extrémité (6) étirable de la bande de store.

3. Store de fenêtre suivant la revendication 1 ou 2,
**caractérisé en ce que** le dispositif (5, 13) commun de transmission de force est en liaison d'entraînement par une première transmission avec l'extrémité (6) étirable de la bande de store et par une deuxième transmission (9) avec l'arbre (2) de store.

4. Store de fenêtre suivant l'une des revendications 1 à 3,
**caractérisé en ce que** le dispositif (5, 13) commun de transmission de force a un arbre (13) d'entraînement commun et une roue (5) d'entraînement qui en est solidaire en rotation, le dispositif (5, 13) commun de transmission de force transmettant un couple de rotation produit par le dispositif (4) d'entraînement par la première transmission (8) et par la deuxième transmission (9).

5. Store de fenêtre suivant l'une des revendications 1 à 4,
**caractérisé en ce que** le couple de rotation transmis par le dispositif (5, 13) commun de transmission de force est transformé par le premier dispositif (8) de transmission en un mouvement de translation transmis à l'extrémité (6) étirable de la bande de store.

6. Store de fenêtre suivant l'une des revendications 1 à 5,
**caractérisé en ce que** le couple de rotation transmis par le dispositif (5, 13) commun de transmission de force est transmis par le deuxième dispositif (9) de transmission en tant que mouvement de rotation à l'arbre (2) de store.

7. Store de fenêtre suivant l'une des revendications 1 à 6,
**caractérisé en ce que** la première transmission (8) a un câble (10, 21, 22) de traction guidé le long d'un côté de la fenêtre ou une barre de traction/poussée stable à la traction et à la poussée dans la direction axiale ainsi que souple, notamment un flexible (11) de balai.

8. Store de fenêtre suivant l'une des revendications 1 à 7,
**caractérisé en ce que** le dispositif (7) de compensation ayant l'élasticité d'un ressort est disposé entre la première transmission (8), notamment entre le câble (10, 21, 22) de traction ou la barre de traction/poussée stable à la poussée et à la traction dans la direction axiale ainsi que souple, notamment entre le flexible de balai et l'extrémité (6) de la bande de store.

9. Store de fenêtre suivant la revendication 8,
**caractérisé en ce que** le dispositif (7) de compensation ayant l'élasticité d'un ressort a un ressort (12) de compression.

10. Store de fenêtre suivant la revendication 8 ou 9,
**caractérisé en ce que** l'extrémité (6) de la bande de store est reliée à la première transmission (8) par deux pièces (43, 44) d'accouplement, qui sont sous la précontrainte du ressort (12) de compression.

11. Store de fenêtre suivant l'une des revendications 1 à 10,
**caractérisé en ce que** la deuxième transmission (9) a un prolongement (29) d'une seule pièce de l'arbre (13) d'entraînement.

12. Store de fenêtre suivant l'une des revendications 1 à 11,
**caractérisé en ce que** le dispositif (7) de compensation ayant l'élasticité d'un ressort est disposé entre l'arbre (13) d'entraînement et l'arbre (2) de store.

13. Store de fenêtre suivant la revendication 12,
**caractérisé en ce que** le dispositif (7) de compensation ayant l'élasticité d'un ressort a un ressort (14) hélicoïdal ou un ressort à crosse ou un ressort (15) spirale.

14. Store de fenêtre suivant l'une des revendications 1 à 13,
**caractérisé en ce que** l'extrémité (6) de la bande de store a un tirant (16) qui est relié aux deux extrémités à des chariots (17) auxquels la force d'entraînement transmise par, respectivement, la première transmission (8) est transmise.

15. Store de fenêtre suivant l'une des revendications 1 à 14,
**caractérisé en ce que** l'arbre (13) d'entraînement ou le prolongement (29) d'une seule pièce de l'arbre (13) d'entraînement est disposé dans un trou traversant de l'arbre (2) de store.

16. Store de fenêtre suivant l'une des revendications 1 à 15,
**caractérisé en ce que** l'un des bouts de l'arbre (2) de store est monté coulissant axialement sur le filetage (28) et l'autre bout est monté coulissant axialement sur l'arbre (13) d'entraînement.

17. Store de fenêtre suivant l'une des revendications 1 à 16,
**caractérisé en ce que**, pour le montage solidaire en rotation et coulissant axialement de l'arbre (25) de store sur l'arbre (13) d'entraînement, il est prévu un arbre (30) auxiliaire en forme de manchon, sur lequel l'arbre (2) de store est monté solidaire en rotation et coulissant axialement et **en ce que** l'arbre (13) d'entrainement est disposé dans le trou traversant de l'arbre (30) auxiliaire en forme de manchon, le dispositif (7) de compensation ayant l'élasticité d'un ressort étant prévu entre l'arbre (13) d'entraînement ou le prolongement (29) d'une seule pièce de l'arbre (13) d'entraînement et l'arbre (30) auxiliaire.

18. Store de fenêtre suivant l'une des revendications 1 à 17,
**caractérisé en ce que** le dispositif (5, 13) commun de transmission de force est disposé à un bout de l'arbre (2) de store et le dispositif (7) de compensation ayant l'élasticité d'un ressort est disposé à l'autre bout de l'arbre (2) de store.

19. Store de fenêtre suivant l'une des revendications 1 à 17,
**caractérisé en ce que** le dispositif (5, 13) commun de transmission de force et le dispositif (7) de compensation ayant l'élasticité d'un ressort sont disposés au même bout de l'arbre (2) de store.

20. Store de fenêtre suivant l'une des revendications 1 à 19,
**caractérisé en ce que** le couple de rotation du dispositif (14) d'entraînement peut être transmis plus loin à une autre bande (18) de store.

21. Store de fenêtre suivant l'une des revendications 1 à 20,
**caractérisé en ce que** l'une des bandes (3) de store sert à recouvrir une fenêtre (1) latérale de véhicule et l'autre bande (18) de store à recouvrir une fenêtre (20) triangulaire séparée de la fenêtre (1) latérale au moyen d'un montant (24) de division de fenêtre.

22. Store de fenêtre suivant l'une des revendications 1 à 21,
**caractérisé en ce que** le couple d'entraînement du dispositif (4) d'entraînement est transmis par une troisième transmission (47) à la bande (18) supplémentaire de store, notamment à l'extrémité (48) étirable de la bande (18) supplémentaire de store.

23. Store de fenêtre suivant la revendication 22,
**caractérisé en ce que** la troisième transmission (47) a une roue (46) d'entraînement, qui entraîne essentiellement en translation une barre de poussée/traction reliée à l'extrémité (48) étirable de la bande de store stable à la compression et à la traction ainsi que souple, notamment un flexible (49) de balai.

24. Store de fenêtre suivant l'une des revendications 21 à 23,
**caractérisé en ce que** la bande (18) de store peut être enroulée sur un arbre de store monté dans la zone du montant (24) de division de fenêtre et peut être déroulée de l'arbre de store.

25. Store de fenêtre suivant l'une des revendications 21 à 24,
**caractérisé en ce que** la troisième transmission (47) a, en outre, un levier (51) d'extraction qui est guidé et déplacé par la barre de poussée/traction stable à la compression et à la traction, notamment par le flexible (49) de balai le long d'une voie (50) de guidage qui est disposée sur le bord inférieur de la fenêtre (20) triangulaire.

26. Store de fenêtre suivant l'une des revendications 1 à 25,
**caractérisé en ce que** l'arbre (25) de sortie du dispositif (4) d'entraînement est raccordé par un engrenage (26, 27) à roue conique au dispositif (5, 13 ) commun de transmission de force et **en ce que** sur l'arbre (25) de sortie est montée, en outre, solidaire en rotation, la roue (46) d'entraînement de la troisième transmission (47).

27. Store de fenêtre suivant la revendication 26,
**caractérisé en ce que** sur l'arbre (25) de sortie est fixée une roue (27) conique et sur l'arbre (13) d'entraînement une autre roue (26) conique engrenant avec elle.

28. Store de fenêtre suivant l'une des revendications 1 à 27,
**caractérisé en ce que** le dispositif (4) d'entraînement est fixé dans la zone de l'extrémité inférieure du montant (24) de division de fenêtre à la portière du véhicule.
